Europäisches Patentamt

European Patent Office

Office européen des brevets

(11) Numéro de publication: **0 231 746 B1**

# FASCICULE DE BREVET EUROPEEN

(45) Date de publication de fascicule du brevet:
**13.03.91**

(51) Int. Cl.⁵: **H01F 7/22**, H01F 36/00

(21) Numéro de dépôt: **87100051.9**

(22) Date de dépôt: **05.01.87**

(54) Chargeur de bobine supraconductrice.

(30) Priorité: **06.01.86 FR 8600098**

(43) Date de publication de la demande:
**12.08.87 Bulletin 87/33**

(45) Mention de la délivrance du brevet:
**13.03.91 Bulletin 91/11**

(84) Etats contractants désignés:
**AT CH DE FR GB IT LI**

(56) Documents cités:
**DE-A- 2 611 266**      **FR-A- 1 419 622**
**FR-A- 1 522 300**      **FR-E- 95 949**
**US-A- 3 435 296**      **US-A- 3 848 162**

(73) Titulaire: **GEC ALSTHOM SA**
**38, avenue Kléber**
**F-75116 Paris(FR)**

(72) Inventeur: **Sabrie, Jean-Louis**
**5, Domaine du Salbert Cravanche**
**F-90300 Valdoie(FR)**

(74) Mandataire: **Weinmiller, Jürgen et al**
**Lennéstrasse 9 Postfach 24**
**W-8133 Feldafing(DE)**

Rank Xerox (UK) Business Services

Description

La présente invention concerne un chargeur de bobine supraconductrice, comprenant un transformateur d'alimentation à enroulement primaire normal alimenté par un réseau et à enroulement secondaire supraconducteur divisé en deux demi-secondaires par un point milieu relié à la première extrémité de la bobine à charger et disposé avec cette bobine dans une enceinte cryogénique à très basse température.

On a déjà proposé dans le document FR-A-95949 un chargeur de bobine supraconductrice de ce genre, dans lequel il est disposé aux bornes du secondaire du transformateur d'alimentation des organes semi-conducteurs (diodes ou thyristors) reliés par leur borne opposée à l'autre extrémité de la bobine à charger.

Toutefois, de telles diodes ou thyristors, même s'ils sont disposés dans une enceinte cryogénique, présentent une résistance électrique non négligeable et entraînent des pertes thermiques importantes.

La présente invention a pour but de procurer un chargeur de bobine supraconductrice dont tous les éléments du circuit secondaire présentent des résistances électriques extrêmement faibles, et dont les pertes thermiques soient très faibles.

Le chargeur de bobine supraconductrice selon l'invention est caractérisé en ce qu'il comporte en outre

a) au moins un premier transformateur auxiliaire à enroulement primaire normal aux bornes d'un organe semi-conducteur et à enroulement secondaire supraconducteur disposé entre l'extrémité de l'enroulement du premier demi-secondaire du transformateur d'alimentation et la seconde extrémité de la bobine à charger,

b) au moins un second transformateur auxiliaire à enroulement primaire normal aux bornes d'un organe semi-conducteur et à enroulement secondaire supraconducteur disposé entre l'extrémité de l'enroulement secondaire du transformateur d'alimentation et la seconde extrémité de la bobine à charger,

les secondaires des transformateurs auxiliaires étant également dans l'enceinte cryogénique à très basse température.

Les organes semi-conducteurs aux bornes des primaires du premier et du second transformateur auxilaire peuvent être des diodes ou des thyristors.

Selon une variante avantageuse, les enroulements primaires normaux du transformateur d'alimentation et/ou des transformateurs auxiliaires sont également disposés dans l'enceinte cryogénique à très basse température. Ceci permet de limiter les courants dans les liaisons électriques avec les circuits à température ambiante à des valeurs très inférieures au courant de la bobine chargée par un choix approprié des rapports de transformation. Ceci est particulièrement intéressant pour un chargeur de petite taille.

Il est décrit ci-après, à titre d'example et en référence aux figures du dessin annexé, un chargeur de bobine supraconductrice comportant des transformateurs auxiliaires dont les enroulements primaires sont fermés sur des diodes.

la figure 1 représente le circuit de charge de la bobine supraconductrice.

La figure 2 représente la variation dans le temps des intensités de courant dans les diodes et dans la bobine.

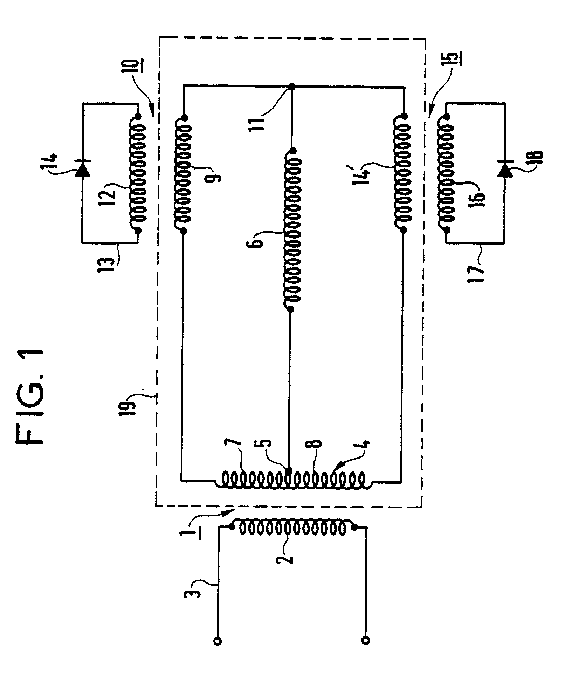

Dans la figure 1, le transformateur d'alimentation 1 comporte un enroulement primaire 2 disposé aux bornes d'un réseau de fréquence industrielle 50 Hz ou 60 Hz. Son secondaire supraconducteur 4 est relié par son point milieu 5 à la bobine supraconductrice 6. Il est divisé en deux demi-secondaires 7 et 8. Le demi-secondaire 7 est relié au secondaire supraconducteur 9 du transformateur auxiliaire 10. L'autre extrémité de ce secondaire est reliée au point 11 à l'extrémité de la bobine supraconductrice opposée à celle reliée au point milieu de transformateur d'alimentation.

L'enroulement primaire 12 du transformateur auxiliaire 10 est un enroulement normal en cuivre. Il est fermé sur un circuit 13 ne comprenant que la diode 14.

De même, le demi-secondaire 8 du transformateur d'alimentation est relié au secondaire supraconducteur 14' d'un transformateur auxiliaire 15, dont l'autre extrémité est reliée par le pont 11 à l'extrémité de la bobine supraconductrice opposée à celle reliée au point milieu du transformateur d'alimentation.

L'enroulement primaire du transformateur auxiliaire 15 est également un enroulement normal en cuivre. Il est fermé sur un circuit 17 ne comprenant que la diode 18.

L'ensemble de la bobine supraconductrice et des enroulements secondaires supraconductrice est contenu dans une enceinte cryogénique 19, maintenue par exemple à $4°$ K environ par un bain d'hélium liquide.

Le fonctionnement du chargeur est le suivant.

A la mise sous tensions, la diode 14 est conductrice.

Le primaire du transformateur 10 est alors en court-circuit.

L'impédance de ce transformateur ramenée à son secondaire 9 est alors très faible. Pendant ce temps, la diode 18 étant non conductrice, le transformateur 15 est à vide ; il présente donc une impédance ramenée à son secondaire 16 très élevée. Le courant de charge passe donc par le secondaire 9 pendant la première alternance.

Au temps t = $\frac{\pi}{\omega}$ ($\omega$ étant égale à 2 $\pi$f, en désignant par f la fréquence du courant), l'on passe à la seconde alternance. La diode formant redresseur 18 devient conducteur, tandis que la diode 14 va se bloquer. L'intensité du courant décroît alors dans la branche contenant le secondaire 9 du transformateur 10, et croît dans la branche contenant le secondaire 16 du transformateur 15.

Le courant dans la bobine 6 ne pouvant varier instantanément, il existe un certain intervalle de temps dit "d'empiétement anodique" pendant lequel deux diodes conduisent simultanément, en raison des inductances de fuite des transformateurs.

La valeur de l'angle d'empiétement anodique augmente à chaque alternance jusqu'à atteindre en définitive la valeur de $\pi$, où le régime de charge est terminé.

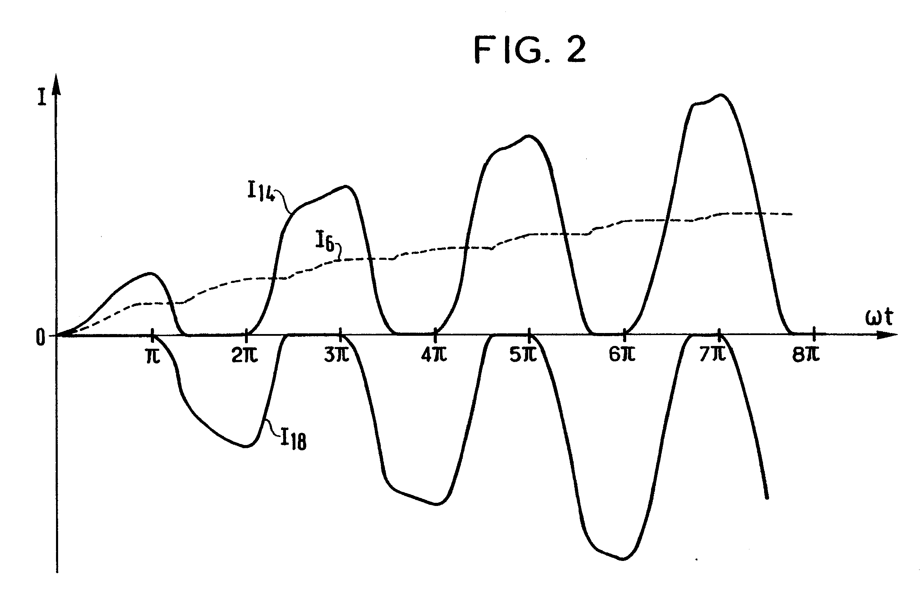

La figure 2 représente en fonction du produit $\omega$t, d'une part en traits continus les intensités $I_{14}$ et $I_{18}$ des courants dans les diodes 14 et 18, d'autre part en trait interrompu l'intensité $I_6$ du courant dans la bobine 6 qui augmente par paliers successifs d'amplitude décroissante.

## Revendications

1. Chargeur de bobine supraconductrice, comprenant un transformateur d'alimentation (1) à enroulement primaire normal (2) alimenté par un réseau (3) et à enroulement secondaire supraconducteur (4) divisé en deux demi-secondaires (7,8) par un point milieu (5) relié à la première extrémité de la bobine (6) à charger et disposé avec cette bobine dans une enceinte cryogénique à très basse température (19), caractérisé en ce qu'il comporte en outre
   a) au moins un premier transformateur auxiliaire (10) à enroulement primaire normal (12) aux bornes d'un organe semi-conducteur (14) et à enroulement secondaire supraconducteur (9) disposé entre l'extrémité de l'enroulement du premier demi-secondaire (7) du transformateur d'alimentation et la seconde, extrémité de la bobine à charger,
   b) au moins un second transformateur auxiliaire (15) à enroulement primaire normal (16) aux bornes d'un organe semi-conducteur (18) et à enroulement secondaire supraconducteur(14) disposé entre l'extrémité de l'enroulement du second demi-secondaire (8) du transformateur d'alimentation et la seconde extrémité de la bobine à charger, les secondaires des transformateurs auxiliaires étant également dans l'enceinte cryogénique à très basse température

re (19).

2. Dispositif selon la revendication 1, caractérisé en ce que les organes semi-conducteurs aux bornes des primaires du premier et du second transformateur auxiliaire sont des diodes.

3. Dispositif selon la revendication 1, caractérisé en ce que les organes semi-conducteurs aux bornes des primaires du premier et du second transformateur auxiliaire sont des thyristors.

4. Dispositif selon l'une des revendiction 1 à 3, caractérisé en ce que les primaires du transformateur d'alimentation et/ou des transformateurs auxiliaires sont également disposés dans l'enceinte cryogénique à très basse température.

## Claims

1. A charger for a superconducting coil, comprising a feed transformer (1) having a normal primary winding (2) fed from a mains (3) and a superconducting secondary winding (4) divided into two secondary half-windings by a mid point (5) connected to the first end of the coil (6) to be charged, and disposed together with said coil in a cryogenic enclosure (9) at a very low temperature, characterized in that it further comprises
   a) at least one first auxiliary transformer (10) having a normal primary winding (12) connected to the terminals of a semiconductor member (14), and a superconducting secondary winding (9) disposed between the end of the first secondary half-winding (7) of the feed transformer and the second end of the coil to be charged,
   b) at least one second auxiliary transformer (15) having a normal primary winding (16) connected to the terminals of a semiconductor member (18), and a superconducting secondary winding (14) disposed between the end of the second secondary half-winding (8) of the feed transformer and the second end of the coil to be charged, the secondary windings of the auxiliary transformers being likewise contained in the cryogenic enclosure (19) at very low temperature.

2. A charger according to claim 1, characterized in that the semiconductor members at the terminals of the primary windings of the first and second auxiliary transformers are constituted by diodes.

3. A charger according to claim 1, characterized in that the semiconductor members at the terminals of the primary windings of the first and second auxiliary transformers are thyristors.

4. A charger according to one of claims 1 to 3, characterized in that the primary windings of the feed transformer and/or the auxiliary transformers are also disposed in the cryogenic enclosure at very low temperature.

**Ansprüche**

1. Ladeschaltung für eine supraleitende Spule, mit einem Speisetransformator, dessen normalleitende Primärwicklung (2) aus einem Netz (3) gespeist wird und dessen supraleitende Sekundärwicklung (4) in zwei Sekundär-Halbwicklungen (7, 8) aufgeteilt ist und einen Mittelpunkt (5) besitzt, der mit dem ersten Ende der zu ladenden Spule (6) verbunden ist und mit dieser Spule in einem Tiefsttemperaturbehälter (19) angeordnet ist, dadurch gekennzeichnet, daß sie weiter aufweist

    a) mindestens einen ersten Hilfstransformator (10) , dessen normalleitende Primärwicklung (12) an den Klemmen eines Halbleiterorgans (14) liegt und dessen supraleitende Sekundärwicklung (9) zwischen dem Ende ersten Sekundär-Halbwicklung (7) des Speisetransformators und dem zweiten Ende der zu ladenden Spule angeordnet ist,

    b) mindestens einen zweiten Hilfstransformator (15), dessen normalleitende Primärwicklung an den Klemmen eines Halbleiterorgans (18) liegt und deseen supraleitende Sekundärwicklung (14) zwischen dem Ende der zweiten Sekundär-Halbwicklung (8) des Speisetransformators und dem zweiten Ende der zu ladenden Spule angeordnet ist, wobei die Sekundärwicklungen der Hilfstransformatoren sich ebenfalls in dem Tiefsttemperaturbereich (19) befinden.

2. Vorrichtung nach Anspruch 1, dadurch gekennzeichnet, daß die Halbleiterorgane an den Klemmen der Primärwicklungen des ersten und des zweiten Hilfstransformators Dioden sind.

3. Vorrichtung nach Anspruch 1, dadurch gekennzeichnet, daß die Halbleiterorgane an den Klemmen der Primärwicklungen des ersten und des zweiten Hilfstransformators Thyristoren sind.

4. Vorrichtung nach einem der Ansprüche 1 bis 3, dadurch gekennzeichnet, daß die Primärwicklungen des Speisetransformators und/oder der Hilfstransformatoren ebenfalls in dem Tiefsttemperaturbehälter angeordnet sind.

FIG. 1

# FIG. 2